# EUROPÄISCHE PATENTANMELDUNG

(11) **EP 1 164 205 A1**
(43) Veröffentlichungstag der Anmeldung: **19.12.2001**
(21) Anmeldenummer: 01113217.2
(22) Anmeldetag: 30.05.2001
(51) Int. Cl.: C23C 4/06, C23C 4/18, C23C 4/02

(54) **Verfahren zum Versehen der Oberfläche von Grundkörpern von Weg- oder Winkelmesssystemen mit magnetisierbarem Material**

(30) Priorität: 14.06.2000 DE 10029258
(71) Anmelder: SIEMENS AKTIENGESELLSCHAFT, 80333 München (DE)
(72) Erfinder: Krumpiegl, Thilo, Dr., 90411 Nürnberg (DE); Kuhn, Andreas, 91056 Erlangen (DE)

(57) **Zusammenfassung**

Durch die Anwendung des Verfahrens des thermischen Spritzens können Grundkörper (GK) zur Herstellung von Messsystemen mit magnetisierbaren Materialien (M) so beschichtet werden, dass der Anwendungsbereich der Messsysteme auf sehr hohe Drehzahlen ausgedehnt werden kann. Aufgrund der magnetischen Eigenschaften wird dabei Hartferritpulver oder Werkstoffe aus Seltenen Erden als magnetisierbares Material bevorzugt. Nach Beendigung des Aufspritzens wird der beschichtete Grundkörper (GK) mit der gewünschten Anzahl von Magnetspuren versehen.

## Beschreibung

Die Erfindung bezieht sich auf ein Verfahren zum Versehen der Oberfläche von Grundkörpern von Weg- oder Winkelmesssystemen mit magnetisierbarem Material.

Bislang wurden für Weg- oder Winkelmesssysteme mit magnetischer Teilung die jeweiligen Magnetspuren dadurch realisiert, dass auf einem Grundkörper, der beispielsweise aus Stahl bestehen konnte, magnetisierbare Ringe aufgesetzt wurden. Problematisch ist dabei jedoch, dass bei sehr hohen Drehzahlen die Gefahr besteht, dass die Ringe sich vom Grundkörper ablösen. Auf dem technischen Sachgebiet der Schutzbeschichtung ist ferner ein Verfahren des thermischen Spritzens bekannt, bei der Schutzbeschichtungen auf Grundkörper durch Materialpartikel, meist in Form von Pulver, unter thermischer Beeinflussung auf Träger aufgebracht werden. Ferner ist aus der US-PS 5 391 403 auch bekannt, in dieser Weise magnetisierbares Material auf Geber für Wegmesssysteme aufzubringen.

Aufgabe der Erfindung ist es, ein solches Verfahren der eingangs genannten Art so auszubilden, dass die mit magnetisierbarem Material versehenen Grundkörper von Messsystemen auch bei starken Beeinflussungen, wie sie insbesondere bei sehr hohen Drehzahlen für Winkelmesssysteme auftreten, gegen ein Ablösen des magnetisierbaren Materials gefeit sind.

Gemäß der Erfindung wird diese Aufgabe für ein Verfahren der eingangs genannten Art so gelöst, dass als magnetisierbares Material eine Mischung aus Ferrit oder Werkstoffen aus Seltenen Erden und einer metallischen Komponente verwendet wird und dass die Zusammensetzung des magnetisierbaren Materials von Beginn bis Ende des Aufspritzens dergestalt kontinuierlich geändert wird, dass der Anteil des Ferrits oder der Werkstoffe aus Seltenen Erden von Beginn bis zum Ende des Aufspritzens ansteigend gewählt wird.

Eine erste vorteilhafte Ausbildung der Erfindung ist dadurch gekennzeichnet, dass die Beschichtung bei einer gleichmäßigen rotierenden Bewegung des Grundkörpers erfolgt. Dadurch lässt sich einerseits eine gleichmäßige Beschichtung mit dem magnetisierbaren Material erreichen und andererseits die Tiefe der Schichtdicke sehr genau festlegen.

Eine weitere vorteilhafte Ausbildung der Erfindung ist dadurch gekennzeichnet, dass das magnetisierbare Material in Form eines Pulvers in einer Korngröße von 1 - 100 µm aufgespritzt wird. Es hat sich gezeigt, dass dabei eine äußerst gute Verbindung des aufgespritzten magnetisierbaren Materials mit der Oberfläche des Grundkörpers, sowie auch des magnetisierbaren Materials untereinander ermöglicht wird.
Erfolgt das Aufspritzen des magnetisierbaren Materials dadurch, dass das Beschichten unter Vakuum durchgeführt wird, so wird dieser Effekt noch verstärkt, da keinerlei Verunreinigungen aus der Atmosphäre die Verbindung zwischen magnetisierbarem Material und Grundkörper beeinträchtigen.

Eine darüber hinaus sehr vorteilhafte Ausprägung der Erfindung, dass die Oberfläche des Grundkörpers vor dem Beschichten aufgeraut wird, erhöht die Haftfestigkeit des magnetisierbaren Materials auf den Grundkörper nochmals.

Eine weitere vorteilhafte Ausprägung der Erfindung ist dadurch gekennzeichnet, dass nach der Beschichtung des Grundkörpers dieser einer Wärmebehandlung unterzogen wird, da durch ein solches Rekristallisationsglühen eine Rückführung des magnetisierbaren Materials aus amorphen zu kristallinen Strukturen ermöglicht wird, wodurch die Voraussetzungen für eine spätere Magnetisierung entscheidend verbessert werden. Dies kann bei Bedarf durch gleichzeitiges Anlegen eines äußeren Magnetfeldes unterstützt werden.

Vorteilhafterweise wird die Oberfläche des mit dem magnetisierbaren Material beschichteten Grundkörpers durch Abschleifen auf Maß gebracht, da dadurch eine Beschädigung der aufgebrachten Oberflächenschicht, wie dies bei anderen Bearbeitungsmethoden, z.B. Drehen, auftreten kann, vermieden wird.

Eine weitere vorteilhafte Ausprägung der Erfindung ist dadurch gekennzeichnet, dass dem beschichteten Grundkörper eine je nach Anwendung erforderliche Anzahl von Magnetspuren eingeprägt wird, da dadurch erst unmittelbar vor dem Einsatz des beschichteten Grundkörpers die Anzahl der gewünschten Magnetspuren festgelegt werden muss.

Eine technisch äußerst vorteilhafte Anwendung der Erfindung liegt darin, dass der Grundkörper als beschichtete Stahlnabe als Messrad in einem magnetoresistiven Drehgebersystem eingesetzt wird.

Ein Ausführungsbeispiel der Erfindung ist in der Zeichnung dargestellt und wird im folgenden näher erläutert, dabei zeigen:
- FIG 1: das Aufbringen von magnetisierbarem Material auf einen Grundkörper,
- FIG 2: einen Ausschnitt des beschichteten Grundkörpers mit dem von innen nach außen kontinuierlich ansteigenden Ferritanteil in der Oberflächenschicht und
- FIG 3: das Magnetisieren des beschichteten Grundkörpers.

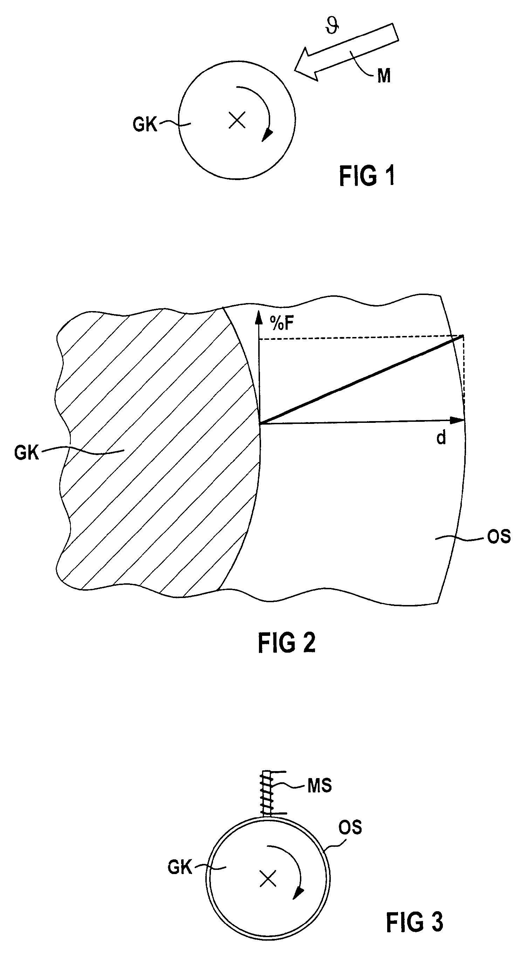

In der Darstellung gemäß FIG 1 ist in Form eines Prinzipbildes das Aufbringen von magnetisierbarem Material M auf einen Grundkörper GK dargestellt. Der Grundkörper GK kann dabei als ein Stahlzylinder angenommen sein, der um eine durch ein Kreuz angedeutete Achse in Richtung eines gebogenen Pfeils gedreht wird. Das magnetisierbare Material M, das beispielsweise in Form von Pulver in einer Korngröße zwischen 1 und 100 µm besteht, wird, wie durch einen Pfeil angedeutet, mit Hilfe von, der Übersichtlichkeit halber nicht dargestellten Vorrichtungen mit hoher Temperatur ϑ auf den Grundkörper GK aufgebracht. Die Temperaturverhältnisse sind dabei so gewählt, dass der eventuell vorgeheizte Grundkörper GK und das vorgeheizte magnetisierbare pulverisierte Material M beim Auftreffen des Materialstroms auf den Grundkörper GK zu einer haftenden homogenen Schicht auf dem Grundkörper GK führen. Dazu kann es vorteilhaft sein, dass der Grundkörper GK zuvor eine bereits aufgeraute Oberfläche aufweist. Das Aufbringen des magnetisierbaren Materials M kann dabei in der natürlichen oder in einer Schutzgasatmosphäre erfolgen, es ist aber auch möglich, diesen Vorgang in Vakuum durchzuführen, wobei letzteres zu besonders definierbaren Ergebnissen führt.

Das magnetisierbare Material M besteht prinzipiell aus Ferriten oder Werkstoffen aus Seltenen Erden mit magnetischen Eigenschaften, aber zusätzlich auch aus metallischen Zuschlagstoffen, die als reines Metall oder als Metalllegierung ausgebildet sein können und die für eine belastungsfähige homogene Oberflächenschicht von Bedeutung sind. Im Interesse einer guten Bindung des magnetisierbaren Materials M mit dem Grundkörper GK kann das thermische Spritzen nun so erfolgen, dass bei Beginn des Aufspritzens beispielsweise der Ferritanteil F im magnetisierbaren Material M zunächst relativ klein gehalten wird und dann kontinuierlich gesteigert wird. Damit ergibt sich sozusagen ein Konzentrationsgradient für die Ferrite in der aufzubringenden Oberflächenschicht OS.

FIG 2 zeigt diesbezüglich einen kleinen, stark vergrößerten Ausschnitts eines Teils des Grundkörpers GK mit aufgebrachter Oberflächenschicht OS, bei dem der oben genannte Konzentrationsgradient in Form eines zweidimensionalen Koordinatensystems beispielhaft durch ein Profil mit linearem Anstieg des Ferritanteils F in Prozent, in Abhängigkeit der Dicke der Oberflächenschicht d, angedeutet ist. Selbstverständlich sind auch andere Profile mit kontinuierlichem Anstieg des Ferritanteils F (z.B. log, x², etc.) möglich.

In der Darstellung gemäß FIG 3 ist die fertige Oberflächenschicht OS auf dem Grundkörper GK bereits als vorhanden angenommen. Mit einem nur in Prinzipdarstellung gezeigten Magnetsystem MS kann dann eine Spurkonfiguration von Magnetspuren auf den mit der Oberflächenschicht OS versehenen Grundkörper GK aufgebracht werden, wenn dieser, wie in diesem Fall dargestellt, um seine Achse (durch ein Kreuz angedeutet) rotierend bewegt wird (durch einen gebogenen Pfeil angedeutet). Vor dem Aufbringen der Magnetspuren auf dem bereits mit der Oberflächenschicht OS versehenen Grundkörper GK kann diese Anordnung durchaus einer Temperaturbehandlung unterzogen werden, um homogene Strukturen zu erzielen. Ebenso können auch gewisse magnetische Vorbehandlungen getroffen werden, um ein definiertes Vorbereiten für das eigentliche Einprägen der Magnetspuren zu realisieren.

Das fertige System aus Grundkörper GK und Oberflächenschicht OS führt nach dem Magnetisieren zu einem Gebilde, das beispielsweise als Messrad in einem Drehgebersystem verwendbar ist.

## Patentansprüche

1. Verfahren zum Versehen der Oberfläche von Grundkörpern von Weg- oder Winkelmesssystemen mit magnetisierbarem Material durch thermisches Spritzen,
**dadurch gekennzeichnet,**
**dass** als magnetisierbares Material (M) eine Mischung aus Ferrit oder Werkstoffen aus Seltenen Erden und einer metallischen Komponente verwendet wird und dass die Zusammensetzung des magnetisierbaren Materials (M) von Beginn bis Ende des Aufspritzens dergestalt kontinuierlich geändert wird, dass der Anteil des Ferrits oder der Werkstoffe aus Seltenen Erden von Beginn bis zum Ende des Aufspritzens ansteigend gewählt wird.

2. Verfahren nach Anspruch 1,
**dadurch gekennzeichnet,**
**dass** die Beschichtung bei einer gleichmäßigen rotierenden Bewegung des Grundkörpers (GK) erfolgt.

3. Verfahren nach Anspruch 1 oder 2,
**dadurch gekennzeichnet,**
**dass** das magnetisierbare Material (M) in Form eines Pulvers in einer Korngröße von 1 - 100 µm aufgespritzt wird.

4. Verfahren nach einem der vorstehenden Ansprüche,
**dadurch gekennzeichnet,**
**dass** das Beschichten unter Vakuum durchgeführt wird.

5. Verfahren nach einem der vorstehenden Ansprüche,
**dadurch gekennzeichnet,**
**dass** die Oberfläche des Grundkörpers (GK) vor dem Beschichten aufgeraut wird.

6. Verfahren nach einem der vorstehenden Ansprüche,
**dadurch gekennzeichnet,**
**dass** nach der Beschichtung des Grundkörpers (GK) dieser einer Wärmebehandlung unterzogen wird.

7. Verfahren nach einem der vorstehenden Ansprüche,
**dadurch gekennzeichnet,**
**dass** die Oberfläche des mit dem magnetisierbaren Material (M) beschichteten Grundkörpers (GK) durch Abschleifen auf Maß gebracht wird.

8. Verfahren nach einem der vorstehenden Ansprüche,
**dadurch gekennzeichnet,**
**dass** dem beschichteten Grundkörper (GK) eine je nach Anwendung erforderliche Anzahl von Magnetspuren eingeprägt wird.

9. Verfahren nach einem der vorstehenden Ansprüche,
**dadurch gekennzeichnet,**
**dass** der Grundkörper (GK) als beschichtete Stahlnabe als Messrad in einem magnetoresistiven Drehgebersystem eingesetzt wird.
